# EUROPÄISCHE PATENTANMELDUNG

(11) **EP 0 858 919 A2**
(43) Veröffentlichungstag der Anmeldung: **19.08.1998**
(21) Anmeldenummer: 97122077.7
(22) Anmeldetag: 15.12.1997
(51) Int. Cl.: B60H 1/00

(54) **Luftsteueranordnung**

(30) Priorität: 17.02.1997 DE 19706083
(71) Anmelder: AURORA Konrad G. Schulz GmbH & Co, 69427 Mudau (DE)
(72) Erfinder: Gruner, Roland, 74864 Robern (DE)
(74) Vertreter: Baronetzky, Klaus, Dipl.-Ing.

(57) **Zusammenfassung**

Es ist eine Luftsteueranordnung für die Heizung und/oder Klimatisierung von Fahrzeugen vorgesehen, die eine Schwenkklappe (10) aufweist, deren Klappenkörper (12) gesteuert von einem Betätigungsorgan zur Beeinflussung eines Luftstroms schwenkbar und seitlich über Lagerzungen an einer Schwenkachse gelagert ist. Die Lagerzungen (20, 22) erstrecken sich von im wesentlichen der Breite des Klappenkörpers (12) quer zur Schwenkachse und verjüngen sich zur Schwenkachse hin.

## Beschreibung

Die Erfindung betrifft eine Luftsteueranordnung gemäß dem Oberbegriff von Anspruch 1.

Eine derartige Luftsteueranordnung ist beispielsweise aus der EP-A2-266 230 bekannt. Diese bekannte Luftsteueranordnung weist eine Schwenkklappe auf, die seitlich an je einer Schwenkachse gelagert ist und um die Schwenkachse für die Luftsteuerung schwenkbar ist. Die Schwenkklappe ist zweischalig ausgebildet, wobei sich die beiden Schalen bogenförmig erstrecken und der Radius der äußeren Schale im wesentlichen dem Abstand zur Schwenkachse entspricht, während der Radius der inneren Schale wesentlich größer ist.

Die Schwenkklappe bildet einen beidseitig offenen Hohlraum, der im Grunde durch die Luftführungen verschlossen werden soll.

Diese bekannte Schwenkklappe neigt jedoch dazu, im Betrieb innen zu verschmutzen. Zwar sollen die offenen Seiten der Schwenkklappe seitlich je an den Luftführungen anliegen. Um die Reibung bei der Betätigung der Schwenkklappe in Grenzen zu halten, verbleibt jedoch ein gewisses seitliches Spiel, und durch diesen Spalt werden in der Frischluft oder Umluft enthaltende Verunreinigungen angesaugt und in das Klappeninnere verbracht. Derartige Verunreinigungen sind nicht nur aus Gründen der Lufthygiene unerwünscht, sondern können bei längerem Betrieb auch zu einer Schwergängigkeit oder gegebenenfalls sogar einem Verklemmen der Klappe führen.

Insbesondere bei Frontheiz-/Klimageräten für Busse sind die räumlichen Verhältnisse für die Luftsteuerung häufig sehr begrenzt. Unter derartigen Verhältnissen lassen sich Schwenkklappen für die Luftsteuerung grundsätzlich erfolgreich einsetzen, wobei es bereits vorgeschlagen wurde, die Schwenkklappe mit geringem Abstand um das Evolventengehäuse eines Doppelradialgebläses schwenken zu lassen, beispielsweise um eine Umsteuerung zwischen Frischluft- und Umluftbetrieb zu ermöglichen. Für eine derartige platzsparende Anordnung ist die aus der EP-A2-266 230 bekannte Schwenkklappe ungeeignet, da der Schwenkradius zu gering ist.

In diesem Zusammenhang ist es jedoch vorgeschlagen worden, seitliche Laschen an einem Schwenkklappenkörper anzubringen, die die Schwenkachsen endseitig tragen sollen und grundsätzlich die erwünschte Steuerungsfunktion beim Verschwenken sicherstellen können.

Nachteilig bei derartigen Klappen sind das vergleichsweise hohe Gewicht und die hohen Reibungskräfte im Verhältnis zu weniger platzsparenden Dreh- oder Winkelklappen. Dabei fallen insbesondere die axial anliegenden Dichtungen ins Gewicht, deren Dichtkraft für die Betätigung der Schwenkklappen überwunden werden muß. Daher sind derartige Schwenkklappen in der Regel nicht mechanisch betätigbar, sondern nur durch drehmomentstarke elektrische oder pneumatische Betätigungen.

Andererseits führt eine einseitige Krafteinleitung in der Klappe aufgrund der geringen Torsionssteifigkeit und der gegenüber den Dichtkräften erforderlichen, vergleichsweisen großen Betätigungsmomente, zur Verwindung der Klappe bei der Betätigung, und damit zu Undichtigkeiten auch im Betrieb. In der Regel sind derartige Schwenkklappen daher nur für eine teure, beidseitig angreifende pneumatische Betätigung geeignet.

Um die Probleme hinsichtlich der Lagerung und Betätigung der Schwenkklappen zu reduzieren, ist es bekannt geworden, anstelle einer kostengünstigen Kunststoffklappenlagerung metallische Lagerzapfen seitlich des Klappenkörpers anzubringen. Bei derartigen Lagerzapfen müssen jedoch ausgesprochen aufwendige und teure gedrehte Metallbuchsen für die Lagerung eingesetzt werden, um zu verhindern, daß die auf Scherung belasteten Kunststofflager früher oder später einreißen oder brechen.

Demgegenüber liegt der Erfindung die Aufgabe zugrunde, eine Luftsteueranordnung gemäß dem Oberbegriff von Anspruch 1 zu schaffen, die bei räumlich beengten Verhältnissen gut einsetzbar ist und eine preisgünstige Betätigung ermöglicht, ohne daß eine teure Lagerung aus gedrehten Metallbuchsen erforderlich wäre.

Diese Aufgabe wird erfindungsgemäß durch Anspruch 1 gelöst. Vorteilhafte Weiterbildungen ergeben sich aus den Unteransprüchen.

Die erfindungsgemäße Lösung erlaubt überraschend eine preisgünstige Konstruktion, ohne die bislang auftretenden Probleme hinsichtlich der Verschmutzungsanfälligkeit, der Klemmneigung und der aufwendigen Betätigung durch pneumatische Betätigungselemente. Überraschend ergibt die erfindungsgemäße Lösung mit den sich verjüngenden Lagerzungen eine dichtschließende Luftsteuerung auch bei einseitiger Betätigung, wobei auch eine preisgünstige mechanische Betätigung im Hinblick auf die geringen anfallenden Betätigungskräfte verwirklicht werden kann.

Dies ist erfindungsgemäß trotz einer verminderten Wandstärke und damit eines verringerten Gewichts möglich, wobei die Verminderung des Gewichts erfindungsgemäß weiter zur Verminderung der erforderlichen Betätigungskräfte beiträgt.

Gemäß einer besonders vorteilhaften Ausgestaltung ist es vorgesehen, die Kunststoffklappenlagerung in die Klappenseitenwand einzubeziehen. Der Hebelarm für die Krafteinleitung wird hierdurch auf Null reduziert, und eine spezielle Blechzunge für die Klappenlagerung entfällt. Hierdurch wird die Gefahr von Ermüdungsbrüchen praktisch auf Null reduziert, und außerdem durch die Vermeidung der Verwindung sichergestellt, daß der Betätigungswinkel über die gesamte Länge der Klappe gleich ist und damit das Verbleiben des Restspalts mit der unerwünschten Fehllufteinleitung sicher vermeidbar ist.

Überraschend läßt sich trotz der Verminderung des Klappengewichts und damit der an sich zu erwartenden Verminderung der Stabilität die Dichtkraft trotz verbesserter Dichtwirkung reduzieren. Gemäß einer vorteilhaften Ausgestaltung ist dies durch eine flächige reibungsarme Abdichtung gewährleistet, die aufgrund der Verminderung der erforderlichen Stellkräfte erlaubt, auf eine mechanische Betätigung zurückzugreifen.

Gemäß einer besonders vorteilhaften Ausgestaltung ist es vorgesehen, den erfindungsgemäßen Klappenkörper doppelwandig auszubilden. Diese Ausführungsform ist besonders steif und besonders für eine lange Bauweise geeignet, wobei trotz einseitiger Betätigung eine sichere Abdichtung über die gesamte Baulänge gewährleistet ist.

Die doppelwandige Bauweise, die sich bevorzugt gerade über den Boden oder Mittelteil des Klappenkörpers erstreckt, läßt sich auf verschiedene Weise herstellen. Beispielsweise kann ein Innenkörper eine Innenwand und entsprechend der Neigung von Seitenflügeln abgewinkelte Flansche aufweisen, die auf den Seitenflügeln befestigt sind. Der Innenkörper kann sich in der Seitenansicht im wesentlichen U-förmig erstrecken, so daß er bis in den Bereich der Lagerzungen reicht und dort - ggf. über Schrägwände - ebenfalls der Aussteifung dient und die mögliche Verformung der erfindungsgemäßen Schwenkklappe reduziert.

Aufgrund der mechanischen Betätigung ist es möglich, den Anteil der Frisch- oder Außenluft gegenüber dem Umluftanteil stufenlos zu regeln. Dies stellt einen besonderen Fortschritt gegenüber der pneumatischen oder elektrischen Betätigung dar, die zwar theoretisch ebenfalls eine stufenlose Regelung ermöglichte, die jedoch aufgrund der hiermit verbundenen Kostennachteile für eine erforderliche Proportionalsteuerung meist entfallen mußte.

Gemäß einer besonders bevorzugten Ausgestaltung ist es vorgesehen, die Schwenkklappe einstückig aus Blech auszugestalten, wobei die Ausrichtung und Stabilisierung der sich seitlich von dem Klappenkörper im Winkel von 90° wegerstreckenden Lagerzungen durch Punktschweißverbindungen realisierbar ist. Die erfindungsgemäße Schwenkklappe kann beispielsweise als gestanztes Blechteil hergestellt und in einem Arbeitsschritt in die erforderliche Form gefalzt bzw. gebogen werden. Gemäß einer weiteren Ausgestaltung ist es vorgesehen, die Seitenflügel des Klappenkörpers, der im wesentlichen schalenförmig ausgebildet ist, durch Punktschweißverbindungen mit dem Boden des Klappenkörpers zu verbinden.

Besonders günstig ist es, wenn sich die Seitenflügel im stumpfen Winkel von dem Boden des Schwenkkörpers wegerstrecken und so durch die Ausgestaltung der Schwenkklappe ein Bogensegment angenähert wird, ohne daß aufgrund der Abweichung von der Grundform eines Bogens Dichtprobleme zu befürchten wären. Beispielsweise kann die erfindungsgemäße Schwenkklappe randseitig an den betreffenden zu verschließenden Öffnungen des Gebläsegehäuses oder den entsprechenden Luftkanälen in den Schwenkendstellungen anliegen, und die Bautiefe der Schwenkklappe ist gegenüber einer reinen Rundform der Schwenkklappe nahezu gleich oder höchstens unwesentlich erhöht.

Gemäß einer bevorzugten Ausgestaltung der erfindungsgemäßen Luftsteueranordnung erstreckt sich die Frischluft-/Umluftöffnung - in Längsrichtung der Schwenkklappe betrachtet - lediglich soweit, daß ausreichend Raum für die Anordnung eines Aussteifungsblechs verbleibt. Dieses erstreckt sich bevorzugt im Winkel von 45° sowohl zu den Lagerzungen als auch der Bodenwand der Schwenkklappe.

Es versteht sich, daß es gemäß einer alternativen Ausgestaltung ohne weiteres möglich ist, eine Kunststoffkonstruktion der erfindungsgemäßen Schwenkklappe zugrunde zu legen. Bevorzugt erstreckt sich auch bei dieser Ausgestaltung die Lagerzunge über im wesentlichen die gesamte Baubreite des Klappenkörpers, so daß trotz der Bereitstellung des erwünschten Schwenkradius' eine Verwindungssteifigkeit und stabile Lagerung ohne Dichtprobleme gewährleistet ist.

Die Kunststoffkonstruktion für die erfindungsgemäße Schwenkklappe kann in beliebiger geeigneter Weise realisiert werden. Beispielsweise ist es auch möglich, die Schwenkklappe tiefzuziehen. Wenn die bevorzugte doppelwandige Konstruktion realisiert werden soll, ist es auch denkbar, diese Konstruktion in einer Doppel-Tiefziehtechnik zu realisieren, indem in einem Schritt eine doppelte Kunststoffolie beidseitig tiefgezogen und zugleich an den je erforderlichen Stellen die beiden Schichten miteinander verbunden werden.

Weitere Vorteile, Einzelheiten und Merkmale ergeben sich aus der nachstehenden Beschreibung eines Ausführungsbeispieles anhand der Zeichnung.

Es zeigt:
- Fig. 1: eine perspektivische und leicht schematisierte Ansicht einer erfindungsgemäßen Luftsteueranordnung unter Darstellung einer Ausführungsform der Schwenkklappe; und
- Fig. 2: eine Schnittansicht einer erfindungsgemäßen Luftsteueranordnung in der Ausführungsform gemäß Fig. 1 und in eingebautem Zustand der Schwenkklappe.

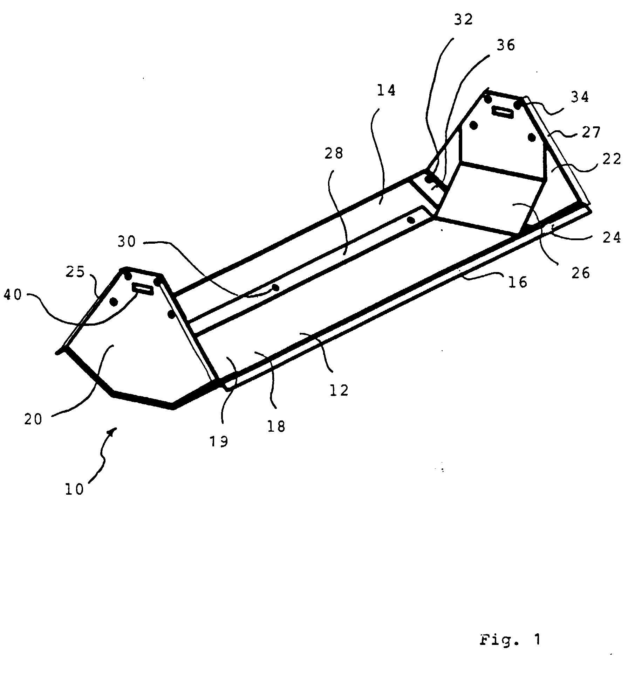

Eine Schwenkklappe 10 gemäß Fig. 1 weist einen Klappenkörper 12 auf, der auch als Klappenschale oder Außenkörper bezeichnet werden kann, nachdem er sich einer konvexen Form angenähert erstreckt. Der Klappenkörper 12 bildet eine flache Wanne mit Seitenflügeln 14, 16 und einer Bodenwand 18. Die Bodenwand 18 ist in dem dargestellten Ausführungsbeispiel doppelwandig ausgebildet und bildet eine Hohlkammer. Hierzu ist zusätzlich zu dem Klappenkörper 12, ein an diesem befestigter Innenkörper 19 vorgesehen, der im Innenbereich des Klappenkörpers 12 befestigt ist.

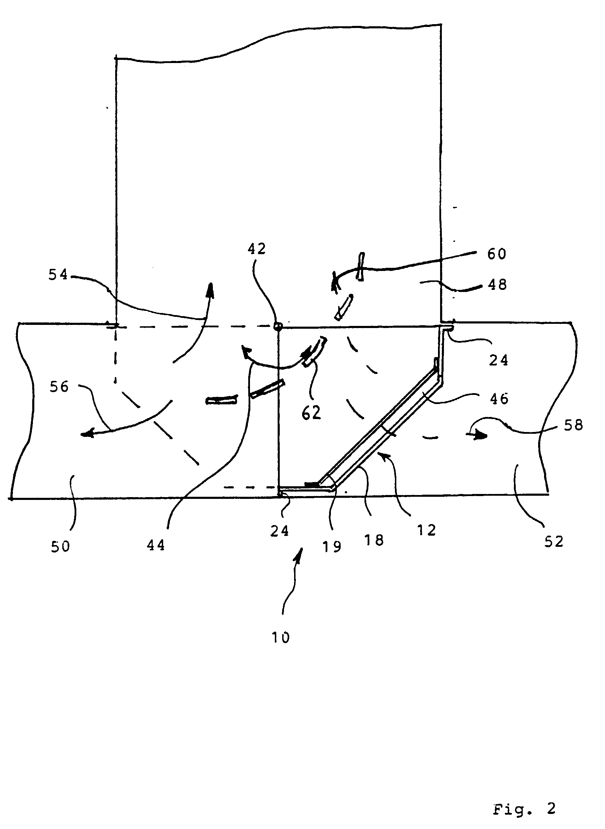

Endseitig des Klappenkörpers 12 sind Lagerzungen 20, 22 ausgebildet, die sich im Winkel von 90° zur Bodenwand 18 erstrecken. Die Lagerzungen erstrecken sich erfindungsgemäß über die gesamte Breite des Klappenkörpers 12, also von einem Ende des einen Seitenflügels 14 bis zum anderen Ende des anderen Seitenflügels 16. In dem dargestellten Ausführungsbeispiel weisen die Seitenflügel 14 und 16 je eine Abkantung 24 auf, die die Luftführung verbessert und zugleich aussteifend wirkt. Insbesondere die Abkantung 24 wirkt als Dichtlippe oder als Dichtfläche, wie es besser aus Fig. 2 ersichtlich ist.

Die Lagerzungen 20 und 22 erstrecken sich in diesem Ausführungsbeispiel bis zum Übergang zwischen den Seitenflügeln 14 und 16 und ihren jeweiligen Abkantungen 24.

Darüberhinaus sind an den Lagerzugen 20 und 22 Dichtflächen 25 und 27 vorgesehen, die sich entlang der Trapez-Seitenkanten der Lagerzungen 20 und 22 erstrecken und für die Anlage an einem entsprechenden Luftkanal geeignet ausgebildet sind.

Während bei der hier dargestellten Ausführungsform Dichtflächen für die Abdichtung vorgesehen sind, ist es gemäß einer alternativen Ausgestaltung vorgesehen, mittels einer zusätzlichen Abkantung endseitig der Dichtflächen 24 bis 27 eine Liniendichtung durch Anlage zu realisieren. Hierdurch wird die Reibung bei der Verstellung weiter reduziert und ist überwiegend von der Lagerreibung abhängig.

Die Lagerzungen 20 und 22 sind zusätzlich über Aussteifungsbleche ausgesteift, von denen ein Aussteifungsblech 26 in der Figur ersichtlich ist. Das Aussteifungsblech ist einstückig mit der Bodenwand 16 und entsprechenden Verstärkungsstreifen an den Lagerzungen 20 und 22 ausgebildet und verläuft im Winkel von 45° sowohl zu den Lagerzungen 20 und 22 als auch zur Bodenwand 16. In diesem Ausführungsbeispiel ist damit ein durchgehender Blechstreifen vorgesehen, der sich von einem Ende der Schwenkklappe 10 zum anderen erstreckt und je zwei Mal abgekantet ist.

Auch wenn eine mit den Seitenflügeln 14 und 16 einstückige Ausgestaltung ohne weiteres möglich ist, ist es in dem dargestellten Ausführungsbeispiel vorgesehen, daß die Seitenflügel 14 und 16 über je einen Flansch, von denen der Flansch 28 in Fig. 1 dargestellt ist, mit den Lagerzungen verbunden ist.

Die Verbindung erfolgt bei dem dargestellten Ausführungsbeispiel über Punktschweißverbindungen, von denen zwei Punktschweißverbindungen 30 und 32 aus der Figur ersichtlich sind. Auch das Aussteifungsblech 26 ist über Punktschweißverbindungen 34 an den Lagerzungen 20 und 22 befestigt, wobei die Lagerzungen 20 und 22 ebenfalls Flansche zu den Seitenflügeln 14 und 16 bilden, von denen aus Fig. 1 der Flansch 36 ersichtlich ist.

Die Lagerzungen 20 und 22 weisen im wesentlichen eine Trapezform auf, wobei die Schwenkachsen über entsprechende Aufnahmen 40 aus Fig. 1 andeutungsweise ersichtlich sind.

Ein in Fig. 1 nicht dargestelltes Betätigungselement greift seitlich an einer Lagerzunge 20 oder 22 an. Aufgrund der besonderen Ausgestaltung des erfindungsgemäßen Klappenkörpers 12 ist es möglich, mit lediglich einem Betätigungsorgan auszukommen, nachdem sich der Klappenkörper 12 nicht verwindet.

In Fig. 2 ist dargestellt, in welcher Weise die erfindungsgemäße Luftsteueranordnung unter Einsatz der erfindungsgemäßen Schwenkklappe 10 verwendet werden kann. Die Schwenkklappe 10 ist koaxial zur Aufnahme 40 an einem Schwenklager 42 gelagert und läßt sich um etwa 90° entsprechend dem Pfeil 44 verschwenken. In der Darstellung gemäß Fig. 2 ist die Schwenkklappe 10 mit durchgezogenen Linien nach rechts verschwenkt dargestellt, während gestrichelte Linien die linke Endposition darstellen.

Wie aus Fig. 2 ersichtlich ist, ist der Innenkörper 19 von der Bodenwand 18 beabstandet montiert. Durch diese Montage wird ein doppelwandiger Boden für die Schwenkklappe erzeugt und es entsteht ein Hohlraum 46. Die Schwenkklappe 10 liegt in der Darstellung gemäß Fig. 2 mit ihrer Abkantung 24 als Dichtfläche an dem Gehäuse eines Luftkanals 48 an, während die andere Abkantung 24 eine Abdichtung gegenüber einem weiteren, lediglich schematisch dargestellten Luftkanal 50 bildet.

In dieser Stellung des Klappenkörpers 12 vermag Luft aus dem linken Luftkanal 50 in den Luftkanal 48 oder umgekehrt aus dem Luftkanal 48 in den Luftkanal 50 einströmen. Die erste Strömungsrichtung ist mit dem durchgezogenen Pfeil 54 und die zweite Strömungsrichtung mit dem durchgezogenen Pfeil 56 angedeutet.

In der nach links verschwenkten Endstellung der Schwenkklappe 10 vermag hingegen die Luft aus dem Luftkanal 48 entsprechend dem gestrichelten Pfeil 58 in den Luftkanal 52 nach rechts strömen, während es in dieser Stellung ebenso möglich ist, daß die Luft entsprechend dem Pfeil 60 aus dem Luftkanal 52 in den Luftkanal 48 einströmt.

Eine mögliche Anwendung für diese Ausführungsform der erfindungsgemäßen Luftsteueranordnung ist bei Strömung in den Luftkanal 48 beispielsweise die Umschaltung zwischen Außenluft und Frischluft, z.B. im Frontbereich eines räumlichen begrenzten Fahrzeugs.

In diesem Fall strömt die Frischluft beispielsweise in Richtung des Pfeiles 54 und die Umluft entsprechend dem Pfeil 60.

Eine andere Anwendung der erfindungsgemäßen Lösung, die ebenfalls gemäß Fig. 2 eine Zwei-Wege-Klappe ermöglicht, ist die Realisierung der Luftumsteuerung für den Fußraum und für die Windschutzscheibenbelüftung eines Fahrzeugs. In diesem Fall strömt die Luft für die Belüftung der Windschutzscheibe beispielsweise entsprechend dem Pfeil 56, und die Luft für die Belüftung des Fußraums strömt entsprechend dem Pfeil 58.

Es versteht sich, daß anstelle der dargestellten Umschaltklappe auch eine reine Absperrklappe realisierbar ist. Die Strömungseigenschaften der erfindungsgemäßen Schwenkklappe für Luft können gemäß einer modifizierten Ausgestaltung, die in Fig. 2 gestrichelt dargestellt ist, durch ein mit der Klappe mitgeführtes Luftleitblech 62 zur Vermeidung von Sekundärwirbeln verbessert werden.

## Patentansprüche

1. Luftsteueranordnung, insbesondere für die Heizung und/oder Klimatisierung von Fahrzeugen, mit einer Schwenkklappe, deren Klappenkörper gesteuert von einem Betätigungsorgan zu einer Beeinflussung eines Luftstroms schwenkbar und seitlich über Lagerzungen an einer Schwenkachse gelagert ist, dadurch **gekennzeichnet,** daß die Lagerzungen (20, 22) sich von im wesentlichen der Breite des Klappenkörpers (12) quer zur Schwenkachse, sich zur Schwenkachse hin verjüngend, erstrecken.

2. Luftsteueranordnung nach Anspruch 1, dadurch gekennzeichnet, daß zwei einander gegenüberliegende, die Schwenkklappe (10) seitlich abschließende Lagerzungen (20, 22) sich im wesentlichen über die gesamte Breite des Klappenkörpers (12) erstrecken.

3. Luftsteueranordnung nach Anspruch 1 oder 2, dadurch gekennzeichnet, daß die Lagerzungen im wesentlichen eine Trapezform mit einem langen Schenkel aufweisen, der dem Klappenkörper (12) benachbart ist.

4. Luftsteueranordnung nach einem der vorhergehenden Ansprüche, dadurch gekennzeichnet, daß die Lagerzungen (20, 22) an dem Klappenkörper (12) fest gelagert und insbesondere einstückig mit diesem ausgebildet sind.

5. Luftsteueranordnung nach einem der vorhergehenden Ansprüche, dadurch gekennzeichnet, daß die Lagerzungen (20, 22) sich - bezogen auf die Schwenkachse - über einen Schwenkwinkel erstrecken, der dem Schwenkwinkel des Klappenkörpers (12) entspricht.

6. Luftsteueranordnung nach einem der vorhergehenden Ansprüche, dadurch gekennzeichnet, daß der Klappenkörper (12) einen flachen, insbesondere doppelwandigen Boden (18) und einander gegenüberliegende, sich schräg seitlich erstreckende Seitenwände (14, 16) aufweist.

7. Luftsteueranordnung nach einem der vorhergehenden Ansprüche, dadurch gekennzeichnet, daß die Schwenkklappe (10) als Blech-Formteil den Klappenkörper (12) und die sich im rechten Winkel hierzu erstreckenden Lagerzungen (20, 22) aufweist und daß der Übergang zwischen den Lagerzungen und dem Klappenkörper mit einem Aussteifungsblech (26) verstärkt ist.

8. Luftsteueranordnung nach einem Ansprüche 1 bis 6, dadurch gekennzeichnet, daß die Schwenkklappe (10) als einstückiges Kunststoff-Spritzteil der Klappenkörper (12) und die sich im rechten Winkel hierzu erstreckenden Lagerzungen (20, 22) aufweist und daß der Übergang zwischen den Lagerzungen (20, 22) und dem Klappenkörper (10) mit einer Verdickung verstärkt ist.

9. Luftsteueranordnung nach einem der vorhergehenden Ansprüche, dadurch gekennzeichnet, daß die Schwenkklappe (10) in sich torsionssteif für die einseitige Anbringung des Betätigungsorgans ausgebildet ist.

10. Luftsteueranordnung nach einem der vorhergehenden Ansprüche, dadurch gekennzeichnet, daß die Schwenkklappe (10) in einem geringen Abstand um ein Spiralgehäuse eines Radialgebläses, insbesondere eines Doppelradialgebläses, erstreckt, das Teil der Heizungs-, Belüftungs- und/oder Klimatisierungsvorrichtung eines Fahrzeugs ist.

11. Luftsteueranordnung nach einem der vorhergehenden Ansprüche, dadurch gekennzeichnet, daß die Schwenkklappe (10) als Umschalt- oder Umsteuerklappe ausgebildet ist und eingangsseitig mit Außenluft- und Umluftkanälen verbunden ist.

12. Luftsteueranordnung nach einem der vorhergehenden Ansprüche, dadurch gekennzeichnet, daß die Schwenkklappe (10) als Steuerklappe als Steuerorgan für den Luftanteil für einen Bypass eines Wärmetauschers ausgebildet ist.

13. Luftsteueranordnung nach einem der vorhergehenden Ansprüche, dadurch gekennzeichnet, daß der Klappenkörper (12) eine Bauhöhe von mindestens 20 % seiner Breite und mindestens 5 % seiner Länge aufweist.

14. Luftsteueranordnung nach einem der vorhergehenden Ansprüche, dadurch gekennzeichnet, daß der Klappenkörper (12) einen doppelten Boden zur Bildung eines Hohlkammerprofils (46) aufweist.
